# EUROPÄISCHE PATENTANMELDUNG

(11) **EP 4 606 701 A1**
(43) Veröffentlichungstag der Anmeldung: **27.08.2025**
(21) Anmeldenummer: 25155556.1
(22) Anmeldetag: 03.02.2025
(51) Int. Cl.: B64C 13/50, G05B 19/042

(54) **VERFAHREN, SYSTEM, AKTUATOR UND LUFTFAHRZEUG**

(30) Priorität: 21.02.2024 DE 102024104848
(71) Anmelder: Liebherr-Aerospace Lindenberg GmbH, 88161 Lindenberg (DE)
(72) Erfinder: IMMLER, Thomas, 88138 Sigmarszell (DE); KINZELMANN, Julian, 88138 Hergensweiler (DE); KOHLÖFFEL, Christian, 88279 Amtzell (DE); SCHILLING, Christian, 88167 Maierhöfen (DE)
(74) Vertreter: Laufhütte, Dieter

(57) **Zusammenfassung**

Die vorliegende Erfindung betrifft ein Verfahren zur Steuerung und/oder Ermittlung einer Position eines Aktuators, insbesondere eines Luftfahrzeugs, wobei der Aktuator eine Steuereinheit, einen Motor und einen Motorpositionssensor für die Ermittlung einer Position des Motors aufweist, wobei die Steuerung und/oder Ermittlung der Position des Aktuators durch die Steuereinheit unter Verwendung der Position des Motors und/oder eines Sensorsignals des Motorpositionssensors erfolgt.

## Beschreibung

Die vorliegende Erfindung betrifft ein Verfahren zur Steuerung und/oder Ermittlung einer Position eines Aktuators, insbesondere eines Luftfahrzeugs, wobei der Aktuator eine Steuereinheit, einen Motor und einen Motorpositionssensor für die Ermittlung einer Position des Motors aufweist.

Der Trend der Elektrifizierung von Elementen, Funktionen und Stellantrieben in der Luftfahrt, mittels des Einsatzes von linearen und rotatorischen elektromechanischen und elektrohydraulischen Aktuatoren schreitet weiter voran. Die Vorteile der Elektrifizierung werden u.a. durch eine effizientere und optimierte Steuerung bzw. Regelung realisiert.

Durch die vermehrte Entwicklung und Verwendung von elektrisch betriebenen Stellantrieben, den vielfältigsten technischen Anwendungen, den gestiegenen Lebensdaueranforderungen sowie neuesten Sicherheitsanforderungen an Aktuatoren, ergeben sich daraus ebenfalls neue Anforderungen an die Steuerungs-, Regelungs-; Sicherheits- und Überwachungskonzepte für zukünftige elektromechanische und elektrohydraulische Aktuatoren. Die Anwendungen innerhalb des zukünftig vorgesehenen Konzepts des "More-Electric-Aircraft" ergeben neue Anforderungen an die Komponenten in Bezug auf Bauraum, Gewicht, Verfügbarkeit, Überprüfbarkeit, Sicherheit etc. und werden in Zukunft an Wichtigkeit gewinnen.

Aus dem Stand der Technik bekannt sind Steuerungen bzw. Regelungen einer Position eines Aktuators in einer übergeordneten Steuerung bzw. einem übergeordneten Rechner, wobei die Steuerung bzw. Regelung unabhängig von der Bauart des Aktuators erfolgt. Dies wird z.B. für elektrohydraulische Aktuatoren (EHA) und Servoaktuatoren in den Flugzeugmustern A400M oder A380 eingesetzt.

Die Steuerung bzw. Regelung der Position des Aktuators erfolgt hierbei in einer übergeordneten Steuerung, z.B. einem "flight control computer" (FCC), der die Position des Aktuators über einen dezidierten Positionssensor, z.B. einen Differentialtransformator (LVDT) ausliest und diese Position für die Steuerung bzw. Regelung verwendet. Die übergeordnete Steuerung berechnet und kommandiert eine durch die Steuerung bzw. Regelung ermittelte Motordrehzahl bzw. einen durch die Steuerung bzw. Regelung ermittelten "Servo-Valve"-Strom. Diese Art der Steuerung bzw. Regelung der Position kann unabhängig der Bauart des Aktuators realisiert werden. Es ist hierbei kein direkter Zusammenhang zwischen der Position des Antriebs des Aktuators, bspw. eines Elektromotors, und der Position des Aktuators notwendig.

In nachteilhafter Weise macht diese hochdynamische Steuerung bzw. Regelung einen schnellen Datentransfer zwischen der übergeordneten Steuerung und der Steuereinheit des Aktuators bzw. der "actuator control electronic" (ACE) notwendig.

Ebenso ist nachteilig, dass es, je nach Kritikalität der Anwendung, notwendig werden kann, redundante Sensoren, z.B. Duplex-LVDT, zu verwenden, was zu höheren Kosten führt.

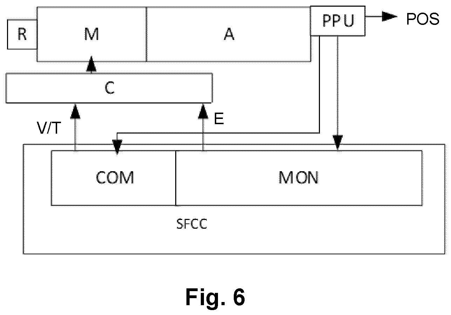

Wie dies in Fig. 6 dargestellt ist, bekommen der Befehlskanal COM und der Monitorkanal MON der übergeordneten Steuerung SFCC jeweils unabhängige Sensorsignale zur Ermittlung der Position des Aktuators POS aus dem Duplex-Sensor PPU.

Die Steuerung des Motors M erfolgt über ein Drehzahl- und/oder Drehmoment-Kommando aus dem Befehlskanal COM der übergeordnetem Steuerung SFCC. Fig. 6 zeigt das Konzept aus einer typischen High-Lift-Architektur.

Bekannt ist ebenso eine Steuerung bzw. Regelung einer Position eines Aktuators in einer Aktuator-Kontroll-Elektronik mittels eines Aktuator-Positionssensor, wie dies z.B. in bekannten "Multi-Role Tanker Transport" (MRTT)-Flugzeugmustern erfolgt.

Die Steuerung bzw. Regelung der Position des Aktuators erfolgt hierbei in einer "actuator control electronic" (ACE), die die Position des Aktuators über einen dezidierten Positionssensor, z.B. einen LVDT, ausliest und diese Position für die Steuerung bzw. Regelung verwendet.

In nachteilhafter Weise sind hierbei redundante dezidierte Positionssensoren notwendig, wenn die Steuerung bzw. Regelung der Position des Aktuators eine kritische Funktion ist, was höhere Kosten verursacht.

Die nach dem Stand der Technik bekannten Steuerungen bzw. Regelungen einer Position eines Aktuators, insbesondere eines elektromechanischen Aktuators, verwenden in nachteilhafter Weise mehr Sensoren als notwendig.

Die nach dem Stand der Technik bekannten Steuerungen bzw. Regelungen einer Position eines Aktuators auf einer übergeordneten Steuerung dauern zu lange, um schnelle Steuerungen bzw. Regelungen einer Position eines Aktuators zu realisieren. Die Zeit des Datentransfers zwischen den Elektronikkomponenten verzögert die Steuerung bzw. Regelung.

Vor diesem Hintergrund liegt der vorliegenden Erfindung die Aufgabe zugrunde, ein Verfahren zur Steuerung einer Position eines Aktuators zu verbessern.

Diese Aufgabe wird durch das Verfahren mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Steuerung und/oder Ermittlung der Position des Aktuators durch die Steuereinheit unter Verwendung der Position des Motors und/oder eines Sensorsignals des Motorpositionssensors erfolgt.

Der Begriff der Steuerung ist vorzugsweise weit zu verstehen und kann sowohl die Steuerung als auch eine Regelung einer Position bedeuten bzw. umfassen.

Es kann vorgesehen sein, dass alternativ oder zusätzlich eine Geschwindigkeit und/oder eine Beschleunigung des Aktuators und/oder einer Komponente, insbesondere eines Betätigungselements, des Aktuators gesteuert wird.

Eine Position des Motors kann bspw. eine Winkellage eines Rotors und/oder einer Welle des Motors sein.

Der Motorpositionssensor für die Ermittlung einer Position des Motors wird vorzugsweise für die Steuerung der Position des Aktuators verwendet. Vorzugsweise wird der Motorpositionssensor für die Ermittlung einer Position des Motors für einen Abgleich mit einer Position des Aktuators verwendet. Dies ist insbesondere möglich, da bei, insbesondere elektromechanischen, Aktuatoren ein direkter Zusammenhang zwischen einer Position des Motors und einer Position des Aktuators vorhanden ist.

Vorzugsweise erfolgt eine, insbesondere sichere, Regelung einer Position eines elektromechanischen Aktuators (EMA), wobei der Aktuator eine vereinfachte Architektur der Aktuator-Elektronik bzw. eine reduzierte Sensorik aufweist.

Vorzugsweise wird der Motorpositionssensor für die Ermittlung einer Position des Motors, wie bspw. ein Elektromotorpositionssensor verwendet, um die Position des Aktuators zu steuern und/oder zu bestimmen.

Insbesondere in einem als EMA ausgebildeten Aktuator kann die Position des Aktuators vorzugsweise direkt von der Position des Motors abgeleitet werden, da die Übersetzung zwischen Motor und Ausgang bzw. dem Betätigungselement des Aktuators konstant und bekannt ist.

Vorzugsweise ist vorgesehen, dass die Steuerung und/oder Ermittlung derart erfolgt, dass kein anderes Sensorsignal, als das Sensorsignal des Motorpositionssensors zur Steuerung und/oder Ermittlung verwendet wird oder dass nur ein weiteres Sensorsignal eines weiteren Sensors, insbesondere eines Aktuatorpositionssensors, zur Steuerung und/oder Ermittlung verwendet wird.

Vorzugsweise ist vorgesehen, dass die Steuereinheit eine Steuereinheit, insbesondere nur, für den Motor ist und/oder dass die Steuerung und/oder Ermittlung, insbesondere nur, durch die Steuereinheit erfolgt.

Vorzugsweise ist vorgesehen, dass eine Referenzposition des Aktuators und/oder des Motors durch einen Sensor, insbesondere einen Aktuatorpositionssensor, und/oder eine übergeordnete Steuerung bereitgestellt wird und/oder dass die Referenzposition durch eine Referenzfahrt des Aktuators ermittelt wird.

Der weitere Sensor, insbesondere der Aktuatorpositionssensor, ist vorzugsweise derart ausgebildet, um eine absolute Position des Aktuators zu erfassen.

Vorzugsweise ist vorgesehen, dass für die Ermittlung der Referenzposition eine, insbesondere von einem Monitorkanal ermittelte, aktuelle Position des Aktuators über eine Datenschnittstelle an die Steuereinheit übermittelt wird.

Um eine absolute Position des Aktuators aus der Position des Motors ableiten zu können, ist vorzugsweise die Bestimmung einer Referenzposition, von der aus eine Abweichung berechnet werden kann, vorgesehen.

Vorzugsweist erfolgt ein "Rigging" der Referenzposition durch eine Referenzfahrt.

Vorzugsweise wird die Referenzposition durch einen separaten Sensor, der in einer anderen Auswerteeinheit als der Steuereinheit ausgewertet wird, bereitgestellt. Vorzugsweise ist eine Kommunikation zwischen der Steuereinheit und der anderen Auswerteeinheit möglich.

Vorzugsweise erfolgt zur Ermittlung der Referenzposition eine Fahrt zu den Anschlägen des Aktuators, wobei der Strom des Motors vorzugsweise ansteigt, wenn die Anschläge des Aktuators erreicht werden und/oder es erfolgt eine Fahrt des Aktuators zu einem berührungslosen Näherungsschalter.

Vorzugsweise ist vorgesehen, dass die Position des Aktuators, insbesondere mittels einer Lastkorrekturfunktion, ermittelt wird, wobei die Position insbesondere durch eine Summe eines Produkts aus einer Position des Motors und einer Getriebeübersetzung und eines Produkts aus einer Steifigkeit, insbesondere eines Antriebsstrangs, des Aktuators und einer zu einem Drehmoment des Motors proportionalen Messgröße ermittelt wird.

Die Steifigkeit des Antriebsstrangs kann auch ein Kennfeld, das insbesondere von Temperatur und einer zu einem Drehmoment des Motors proportionalen Messgröße abhängt, sein.

Vorzugsweise ist vorgesehen, dass das Verfahren die folgenden Schritte aufweist:
- Fahren des Aktuators auf einen Anschlag, wobei ein Strom des Motors des Aktuators erhöht wird;
- Ermitteln einer Steifigkeit, insbesondere eines Antriebsstrangs, des Aktuators.

Vorzugsweise ist vorgesehen, dass die Position des Aktuators, insbesondere mittels einer Positionskorrekturfunktion, ermittelt wird, wobei die Position des Aktuators insbesondere durch die Summe einer ermittelten Position des Aktuators und eines Aktuatorspiels des Aktuators ermittelt wird, wobei das Vorzeichen des Spiels des Aktuators mittels Zustandsgrößen, insbesondere mittels einer Position und/oder Drehrichtung, des Motors und/oder mittels einer Lastinformation, insbesondere eines Stroms des Motors, ermittelt wird.

Das Akutatorspiel kann auch als Backlash bezeichnet werden. Das Aktuatorspiel kann auch ein Kennfeld, das insbesondere von Temperatur und einer zu einem Drehmoment des Motors proportionalen Messgröße abhängt, sein.

Vorzugsweise ist vorgesehen, dass das Verfahren die folgenden Schritte aufweist:
- Drehen des Motors in eine Richtung, bis eine Bewegung des Aktuators, insbesondere eines Betätigungselements, messbar wird;
- Drehen des Motors in eine andere Richtung, bis eine Bewegung des Aktuators, insbesondere eines Betätigungselements, messbar wird;
- Ermitteln eines Aktuatorspiels des Aktuators.

Vorzugsweise ist vorgesehen, dass die Position des Aktuators durch einen Beobachter ermittelt wird.

Vorzugsweise ist vorgesehen, dass die mittels des Motorpositionssensors ermittelte Position des Aktuators durch eine durch einen Aktuatorpositionssensor ermittelte Position des Aktuators, die insbesondere durch einen Monitorkanal übertragen wird, korrigiert wird.

Vorzugsweise ist vorgesehen, dass vor oder nach einem Abschalten des Aktuators eine aktuelle Position des Aktuators und/oder des Motors gespeichert wird und nach einem nachfolgenden Einschalten des Aktuators als Referenzposition verwendet wird, wobei vorzugsweise eine neue Referenzposition ermittelt wird, sofern die gespeicherte Position des Aktuators und/oder des Motors von einer gemessenen Position des Aktuators und/oder des Motors abweicht.

Vorzugsweise ist vorgesehen, dass der Motorpositionssensor ein Resolver oder ein Inkrementalgeber und/oder kein absoluter Positionssensor in Bezug auf die Aktuatorposition ist.

Die Steuerung bzw. Regelung der Position des Aktuators kann z.B. über die Position des Motors, z.B. mittels eines Resolvers, eines Inkremental-Gebers und/oder einem nicht absolut messenden, also relativem Sensor bezogen auf eine Referenzposition bzw. Ausgangsposition des Aktuators erfolgen.

Die Erfindung betrifft auch ein System, insbesondere für ein Luftfahrzeug, mit Mitteln, insbesondere einem Aktuator mit einer Steuereinheit, einem Motor und einem Motorpositionssensor, die dazu ausgebildet sind, ein erfindungsgemäßes Verfahren durchzuführen.

Vorzugsweise ist vorgesehen, dass die Komponenten, insbesondere die Steuereinheit, der Motor und der Motorpositionssensor, des Aktuators in einer baulichen Einheit angeordnet sind. Es kann auch vorgesehen sein, dass die Komponenten des Aktuators in einem verteilten System in verschiedenen baulichen Einheiten angeordnet sind.

Der Motor ist vorzugsweise ein Elektromotor. Der Motor ist vorzugsweise derart ausgebildet und angeordnet, um ein Betätigungselement des Aktuators zu bewegen. Eine Position, Geschwindigkeit und/oder Beschleunigung des Aktuators ist vorzugweise eine Position, Geschwindigkeit und/oder Beschleunigung des Betätigungselements. Das Betätigungselement kann ein Linearaktuator oder ein Rotationsaktuator sein.

Vorzugsweise ist vorgesehen, dass das System einen Aktuator aufweist, wobei der Aktuator ein elektromechanischer oder elektrohydraulischer Aktuator ist.

Die Erfindung betrifft auch einen Aktuator für ein erfindungsgemäßes System.

Vorzugsweise weist das System eine Architektur, die den Einsatz von einfachen Aktuatoren mit reduzierter Sensorik ohne Sicherheitseinschränkungen, ermöglicht.

Vorzugsweise weist das System eine Aktuator-Positionsregeleinrichtung mit mindestens einem EMA, der mindestens einen Motor, einen Motorpositionssensor und eine Steuereinheit, insbesondere eine Motorsteuereinheit aufweist.

Vorzugsweise wird eine Position, bspw. eine Ausgangsposition, des Aktuators durch die Motorsteuereinheit über die Motorposition geregelt.

Vorzugsweise wird eine absolute Referenzposition durch eine übergeordnete Steuerung zur Initialisierung der Steuerung der Position, bspw. der Ausgangsposition bereitgestellt.

Vorzugsweise wird eine Referenzposition durch eine Referenzfahrt zu den Endanschlägen des Aktuators initialisiert. Die Initialisierungssequenz, bspw. die Referenzfahrt, kann entweder durch die Steuereinheit oder durch eine übergeordnete Steuerung gesteuert werden.

Vorzugsweise ist vorgesehen, dass eine Position, insbesondere eine Ist-Position, des Aktuators mittels einer Lastkorrekturfunktion mit der folgenden Formel berechnet wird: P_actuator = P_motor * r + k * i, wobei
P_actuator die Position des Aktuators ist,
P_motor die Position des Motors ist,
k die Steifigkeit eines Antriebsstrangs des Aktuators ist,
i eine zum Drehmoment des Motors proportionale Messgröße ist und
r die Übersetzung eines Getriebes zwischen Motor und Betätigungselement des Aktuators ist. Die Variable oder der Parameter k kann allgemein auch ein Kennfeld sein. Die Variable oder der Parameter k kann eine Funktion von i und der Temperatur sein.
Vorzugsweise ist vorgesehen, dass eine Position, insbesondere eine Ist-Position des Aktuators mittels einer Positionskorrekturfunktion mit der folgenden Formel berechnet wird: P_actuator_2 = P_actuator + Vorzeichen * c, wobei
c das Aktuatorspiel bzw. "Backlash" des Aktuators ist. Vorzugsweise wird das Vorzeichen durch Zustandsgrößen des Motors, wie bspw. Position des Motors, Drehrichtung des Motors und/oder Lastinformation, insbesondere Strom des Motors, des Motors bestimmt. Die Variable oder der Parameter c kann allgemein auch ein Kennfeld sein. Die Variable oder der Parameter c kann eine Funktion von i und der Temperatur sein.

Vorzugsweise wird die Position P_actuator_2 durch einen Beobachter bestimmt.

Vorzugsweise wird für die Initialisierung einer Position, bspw. einer Referenzposition, die von einem Monitorkanal ermittelte Position des Aktuators P_actuator der Steuereinheit über eine Datenschnittstelle zur Verfügung gestellt.

Vorzugsweise werden Ungenauigkeiten einer Position, insbesondere einer Ist-Position, die z.B. durch Temperatur- oder Alterungseffekte verursacht werden können, zu einer angenommenen Ist-Position über ein von einem Monitorkanal zur Verfügung gestelltes Aktuator-Positionssignal in einem begrenzten Maße korrigiert.

Alternativ oder zusätzlich ist ein Verfahren zum Kalibieren des Systems mit folgenden Schritten vorgesehen:
1. Aktuator wird auf einen Anschlag gefahren;
2. Motorstrom wird erhöht;
3. Ermittlung des Parameters k, wobei k eine Steifigkeit eines Antriebsstrangs des Aktuators sein kann.

Alternativ oder zusätzlich ist ein Verfahren zum Kalibieren des Systems mit folgenden Schritten vorgesehen:
1. Motor wird gedreht, bis eine Bewegung des Aktuators, insbesondere eines Betätigungselements, messbar ist
2. Motor wird in die andere Richtung gedreht bis am Ausgang eine Bewegung des Aktuators, insbesondere eines Betätigungselements, messbar wird;
3. Ermittlung des Parameters c, wobei c ein Aktuatorspiel des Aktuators sein kann.

Vorzugsweise ist vorgesehen, dass die aktuelle Position des Aktuators und die aktuelle Position des Motors nach Ausschalten des Aktuators und/oder des Systems gespeichert werden, und beim Start des Aktuators und/oder des Systems als Referenzposition verwendet werden. Wenn die gespeicherte Position des Motors mit einer gemessenen Position des Motors nicht übereinstimmt, wird vorzugsweise eine Initialisierung angefordert.

Die Erfindung betrifft auch ein Luftfahrzeug, insbesondere Flugzeug, mit einem erfindungsgemäßen System und/oder einem erfindungsgemäßen Aktuator.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1 bis Fig. 2:: jeweils ein schematisches Ablaufdiagramm einer Ausführungsform eines erfindungsgemäßen Verfahrens.
- Fig. 3 bis Fig. 5:: jeweils ein schematisches Blockschaltbild einer Ausführungsform eines erfindungsgemäßen Systems.
- Fig. 6:: ein schematisches Blockschaltbild einer Ausführungsform eines Systems aus dem Stand der Technik.

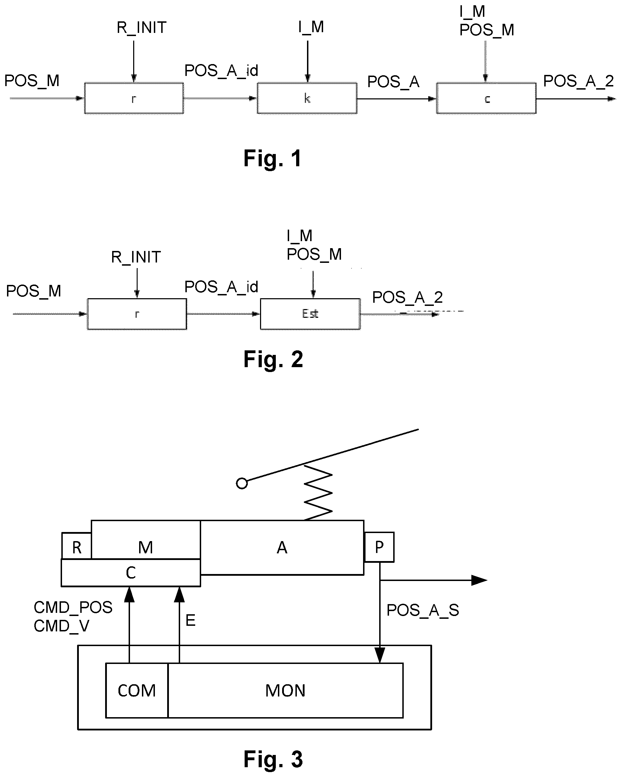

In Fig. 1 erfolgt in einem Schritt r die Ermittlung einer idealen Position des Aktuators POS_A_id unter Berücksichtigung einer Position des Motors POS_M und einer initialen Referenzposition R_INIT.

In einem Schritt k erfolgt sodann aus der idealen Position des Aktuators POS A_id und dem Strom des Motors I_M die Ermittlung einer Position des Aktuators POS_A.

In einem Schritt c erfolgt sodann aus der Position des Aktuators POS_A und dem Strom des Motors I_M sowie einer Position des Motors POS_M die Ermittlung einer Position des Aktuators POS_A_2.

In Fig. 2 erfolgt in einem Schritt r die Ermittlung einer idealen Position des Aktuators POS_A_id unter Berücksichtigung einer Position des Motors POS_M und einer initialen Referenzposition R_INIT.

In einem Schritt Est erfolgt sodann aus der idealen Position des Aktuators POS_A_id und dem Strom des Motors I_M sowie einer Position des Motors POS_M die Ermittlung einer Position des Aktuators POS_A_2.

Es können somit mehrere Positionen des Aktuators POS_A_id, POS_A und/oder POS_A_2, insbesondere aus einer Position des Motors POS_M und/oder aus einer anderen ermittelten Position des Aktuators, ermittelt werden.

Es kann eine Initialisierung der Position des Aktuars mit einem Signal aus einem Monitorkanal erfolgen.

Es kann eine Erhöhung der Genauigkeit der Steuerung bzw. Regelung der Position des Aktuators durch Verwendung von Korrekturfunktionen, wie einer Lastkorrekturfunkton zur Korrektur des Einflusses einer Steifigkeit, insbesondere eines Antriebsstrangs, des Aktuators und/oder einer Positionskorrekturfunktion zur Korrektur des Einflusses eines Aktuatorspiels des Aktuators erfolgen.

Ein oder mehrere Parameter der Korrekturfunktionen können durch eine Initiierung und/oder Kalibrierung ermittelt werden.

Es kann eine Korrektur der ermittelten Position des Aktuators durch Informationen aus einem Monitorkanal erfolgen.

Über eine Rückführung der Position des Aktuators erfolgt eine Regelung der Position des Aktuators.

Das System in Fig. 3 weist einen Aktuator mit einem Motor M und einem Betätigungselement A auf. Ferner weist das System einen Motorpositionssensor R, eine Steuereinheit C, einen Aktuatorpositionssensor P und eine übergeordnete Steuerung mit einem Befehlskanal COM und einem Monitorkanal MON auf.

Das Betätigungselement A ist dazu ausgebildet und angeordnet ein Element eines Luftfahrzeugs, wie eine Klappe oder eine Oberfläche, zu betätigen und/oder zu bewegen. Das Betätigungselement A kann linear oder rotatorisch bewegt werden, wobei das Betätigungselement A ein Linearaktuator oder ein Rotationsaktuator sein kann.

Der Motor M kann durch eine Steuereinheit C angesteuert werden. Eine Position des Motors M kann durch einen Motorpositionssensor R ermittelt werden.

Der Befehlskanal COM kann eine Position und/oder eine Geschwindigkeit für den Aktuator in Form eines Signals CMD_POS oder CMD_V an die Steuereinheit C kommandieren.

Der Monitorkanal MON kann ein Sensorsignal POS_A_S des Aktuatorpositionssensor P mit Informationen über die Position des Aktuators empfangen. Der Monitorkanal kann an die Steuereinheit C ein Freigabesignal bzw. ein "Enable" E senden.

Die übergeordnete Steuerung kann eine "Remote-Electronic-Unit" (REU) oder ein "flight control computer" (FCC) oder Bestandteil davon sein.

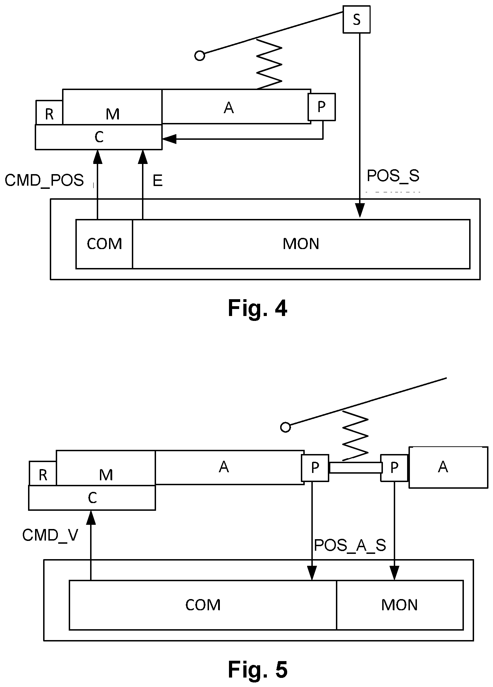

Das System aus Fig. 4 weist zusätzlich zu dem System aus Fig. 3 einen Elementpositionssensor S auf. Das Sensorsignal POS_S des Elementpositionssensor S kann von dem Monitorkanal MON der übergeordneten Steuerung empfangen und damit zur Überwachung der Position und/oder Funktion des ersten Aktuators verwendet werden. Im Unterschied zum System aus Fig. 3 kann das Signal aus dem Aktuator-positionssensor P an die Steuereinheit C gesendet werden bzw. von der Steuereinheit C empfangen werden. Der Befehlskanal COM kann eine Position für den Aktuator in Form eines Signals CMD_POS an die Steuereinheit C kommandieren.

Das System aus Fig. 5 weist zusätzlich zu dem System aus Fig. 3 einen zweiten Aktuator mit einem Betätigungselement A und einem Aktuatorpositionssensor P auf. Das Signal POS_A_S des Aktuatorpositionssensor P des zweiten Aktuators kann von dem Monitorkanal M empfangen und damit zur Überwachung der Position und/oder Funktion des ersten Aktuators verwendet werden. Der Befehlskanal COM kann eine Geschwindigkeit für den Aktuator in Form eines Signals CMD_V an die Steuereinheit C kommandieren.

Ein Vorteil der Erfindung ist, dass weniger Sensorik für die Ansteuerung von Aktuatoren notwendig ist und damit einhergehend eine Reduktion der Komplexität erfolgt.

Ein weiterer Vorteil der Erfindung ist, dass eine vereinfachte Architektur der Aktuator-Elektronik möglich ist.

Ein weiterer Vorteil der Erfindung ist, dass eine hochdynamische Regelung möglich wird, da die Regelung der Position des Aktuators in der Steuereinheit des Motors erfolgt.

## Patentansprüche

1. Verfahren zur Steuerung und/oder Ermittlung einer Position eines Aktuators, insbesondere eines Luftfahrzeugs, wobei der Aktuator eine Steuereinheit, einen Motor und einen Motorpositionssensor für die Ermittlung einer Position des Motors aufweist, **dadurch gekennzeichnet, dass** die Steuerung und/oder Ermittlung der Position des Aktuators durch die Steuereinheit unter Verwendung der Position des Motors und/oder eines Sensorsignals des Motorpositionssensors erfolgt.

2. Verfahren nach Anspruch 1, **dadurch gekennzeichnet, dass** die Steuerung und/oder Ermittlung derart erfolgt, dass kein anderes Sensorsignal, als das Sensorsignal des Motorpositionssensors zur Steuerung und/oder Ermittlung verwendet wird oder dass nur ein weiteres Sensorsignal eines weiteren Sensors, insbesondere eines Aktuatorpositionssensors, zur Steuerung und/oder Ermittlung verwendet wird.

3. Verfahren nach Anspruch 1 oder 2, **dadurch gekennzeichnet, dass** die Steuereinheit eine Steuereinheit, insbesondere nur, für den Motor ist und/oder dass die Steuerung und/oder Ermittlung, insbesondere nur, durch die Steuereinheit erfolgt.

4. Verfahren nach einem der vorhergehenden Ansprüche, **dadurch gekennzeichnet, dass** eine Referenzposition des Aktuators und/oder des Motors durch einen Sensor, insbesondere einen Aktuatorpositionssensor, und/oder eine übergeordnete Steuerung bereitgestellt wird und/oder dass die Referenzposition durch eine Referenzfahrt des Aktuators ermittelt wird.

5. Verfahren nach Anspruch 4, **dadurch gekennzeichnet, dass** für die Ermittlung der Referenzposition eine, insbesondere von einem Monitorkanal ermittelte, aktuelle Position des Aktuators über eine Datenschnittstelle an die Steuereinheit übermittelt wird.

6. Verfahren nach einem der vorhergehenden Ansprüche, **dadurch gekennzeichnet, dass** die Position des Aktuators, insbesondere mittels einer Lastkorrekturfunktion, ermittelt wird, wobei die Position insbesondere durch eine Summe eines Produkts aus einer Position des Motors und einer Getriebeübersetzung und eines Produkts aus einer Steifigkeit, insbesondere eines Antriebsstrangs, des Aktuators und einer zu einem Drehmoment des Motors proportionalen Messgröße ermittelt wird.

7. Verfahren nach einem der vorhergehenden Ansprüche, **gekennzeichnet durch** die folgenden Schritte:
- Fahren des Aktuators auf einen Anschlag, wobei ein Strom des Motors des Aktuators erhöht wird;
- Ermitteln einer Steifigkeit, insbesondere eines Antriebsstrangs, des Aktuators.

8. Verfahren nach einem der vorhergehenden Ansprüche, **dadurch gekennzeichnet, dass** die Position des Aktuators, insbesondere mittels einer Positionskorrekturfunktion, ermittelt wird, wobei die Position des Aktuators insbesondere durch die Summe einer ermittelten Position des Aktuators und eines Aktuatorspiels des Aktuators ermittelt wird, wobei das Vorzeichen des Spiels des Aktuators mittels Zustandsgrößen, insbesondere mittels einer Position und/oder Drehrichtung, des Motors und/oder mittels einer Lastinformation, insbesondere eines Stroms des Motors, ermittelt wird.

9. Verfahren nach einem der vorhergehenden Ansprüche, **gekennzeichnet durch** die folgenden Schritte:
- Drehen des Motors in eine Richtung, bis eine Bewegung des Aktuators, insbesondere eines Betätigungselements, messbar wird;
- Drehen des Motors in eine andere Richtung, bis eine Bewegung des Aktuators, insbesondere eines Betätigungselements, messbar wird;
- Ermitteln eines Aktuatorspiels des Aktuators.

10. Verfahren nach einem der vorhergehenden Ansprüche, **dadurch gekennzeichnet, dass** die Position des Aktuators durch einen Beobachter ermittelt wird.

11. Verfahren nach einem der vorhergehenden Ansprüche, **dadurch gekennzeichnet, dass** die mittels des Motorpositionssensors ermittelte Position des Aktuators durch eine durch einen Aktuatorpositionssensor ermittelte Position des Aktuators, die insbesondere durch einen Monitorkanal übertragen wird, korrigiert wird.

12. Verfahren nach einem der vorhergehenden Ansprüche, **dadurch gekennzeichnet, dass** vor oder nach einem Abschalten des Aktuators eine aktuelle Position des Aktuators und/oder des Motors gespeichert wird und nach einem nachfolgenden Einschalten des Aktuators als Referenzposition verwendet wird, wobei vorzugsweise eine neue Referenzposition ermittelt wird, sofern die gespeicherte Position des Aktuators und/oder des Motors von einer gemessenen Position des Aktuators und/oder des Motors abweicht.

13. Verfahren nach einem der vorhergehenden Ansprüche, **dadurch gekennzeichnet, dass** der Motorpositionssensor ein Resolver oder ein Inkrementalgeber und/oder kein absoluter Positionssensor in Bezug auf die Aktuatorposition ist.

14. System, insbesondere für ein Luftfahrzeug, mit Mitteln, insbesondere einem Aktuator mit einer Steuereinheit, einem Motor und einem Motorpositionssensor, die dazu ausgebildet sind, ein Verfahren nach einem der vorhergehenden Ansprüche durchzuführen.

15. System nach Anspruch 14, **dadurch gekennzeichnet, dass** das System einen Aktuator aufweist, wobei der Aktuator ein elektromechanischer oder elektrohydraulischer Aktuator ist.

16. Aktuator für ein System nach einem der Ansprüche 14 bis 15.

17. Luftfahrzeug, insbesondere Flugzeug, mit einem System nach einem der Ansprüche 14 bis 15 und/oder einem Aktuator nach Anspruch 16.
